# FASCICULE DE BREVET EUROPEEN

(11) **EP 2 976 218 B1**
(45) Date de publication et mention de la délivrance du brevet: **25.01.2017**
(21) Numéro de dépôt: 14708061.8
(22) Date de dépôt: 06.03.2014
(51) Int. Cl.: B32B 25/08, B60C 1/00, B60C 9/00, B32B 25/16

(54) **STRATIFIE MULTICOUCHE POUR PNEUMATIQUE**
MEHRSCHICHTFOLIE FÜR REIFEN
MULTILAYER LAMINATE FOR TYRES

(30) Priorité: 22.03.2013 FR 1352560
(43) Date de publication de la demande: 27.01.2016
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GREIVELDINGER, Marc, F-63040 Clermont-Ferrand Cedex 9 (FR); GAUTHIER, Catherine, F-63040 Clermont-Ferrand Cedex 9 (FR); TRIGUEL, Aurélie, F-63040 Clermont-Ferrand Cedex 9 (FR)
(74) Mandataire: Sidhu, Alban
(86) Numéro de dépôt international: PCT/EP2014/054371
(87) Numéro de publication internationale: WO 2014/146909

(56) Documents cités:
- EP-A1- 2 298 577
- EP-A1- 2 415 617
- WO-A1-2010/139700
- WO-A1-2011/009910
- WO-A1-2011/076801
- WO-A1-2011/131560
- WO-A1-2011/141466
- WO-A1-2012/010667
- FR-A1- 2 954 334
- FR-A1- 2 969 631

## Description

La présente invention est relative aux stratifiés pour pneumatiques comportant une composition étanche dont les élastomères sont majoritairement des élastomères thermoplastiques à blocs, comportant au moins un bloc central polyisobutylène et des blocs adjacents constitués d'au moins un monomère polymérisé, autre qu'un monomère styrénique, dans une de leurs couches élastomériques.

Dans un pneumatique conventionnel les différentes couches élastomériques sont constituées de compositions d'élastomères diéniques, adhérant les unes aux autres par les liaisons créées lors de la réticulation desdits élastomères. Ces couches doivent donc être associées avant la cuisson (ou la réticulation) afin de permettre leur adhésion.

Il est d'intérêt aujourd'hui pour les fabricants de pneumatique, d'utiliser des couches élastomériques étanches comprenant, à titre d'élastomères, majoritairement des élastomères thermoplastiques à blocs, comportant au moins un bloc central polyisobutylène et des blocs adjacents constitués d'au moins un monomère polymérisé, autre qu'un monomère styrénique, afin de bénéficier des propriétés de ces élastomères, notamment pour l'étanchéité, la réduction de la résistance au roulement et la facilité de mise en oeuvre.

La difficulté de l'utilisation de telles couches, dont les élastomères sont majoritairement des élastomères thermoplastiques (TPE), en particulier les élastomères thermoplastiques à blocs, comportant au moins un bloc central polyisobutylène et des blocs adjacents constitués d'au moins un monomère polymérisé, autre qu'un monomère styrénique, est leur adhésion aux couches diéniques adjacentes de composition conventionnelle, et ce, avant la cuisson du stratifié résultant ou après la cuisson de la couche adjacente à la couche dont les élastomères sont majoritairement des élastomères thermoplastiques à blocs, comportant au moins un bloc central polyisobutylène et des blocs adjacents constitués d'au moins un monomère polymérisé, autre qu'un monomère styrénique.

Les demanderesses ont précédemment décrit des couches étanches pour pneumatique comportant une couche dont les élastomères sont majoritairement des élastomères thermoplastiques à blocs, comportant au moins un bloc central polyisobutylène et des blocs adjacents constitués d'au moins un monomère polymérisé, autre qu'un monomère styrénique, par exemple dans le document WO2011/131560. Dans ce document, une couche étanche est décrite, sans que soit indiqué un stratifié composé de cette couche étanche et d'une deuxième couche, diénique, et présentant une bonne adhésion entre les deux couches dudit stratifié.

Le document EP 2 415 617 A1 décrit un stratifié élastomérique étanche pour pneumatique comportant deux couches d'élastomère superposées.

Dans le but d'améliorer les pneumatiques conventionnels par l'utilisation d'une couche étanche majoritairement à base d'un élastomère thermoplastique à blocs, comportant au moins un bloc central polyisobutylène et des blocs adjacents constitués d'au moins un monomère polymérisé, autre qu'un monomère styrénique, tout en simplifiant l'adhésion d'une telle couche à une couche diénique adjacente, réticulée ou non réticulée, la demanderesse a trouvé de manière surprenante le stratifié de l'invention.

L'invention a donc pour objet un stratifié élastomérique étanche pour pneumatique, ledit stratifié comportant au moins deux couches adjacentes d'élastomère :
∘ une première couche, constituée d'une composition à base d'au moins :
   - un élastomère thermoplastique à blocs, comportant au moins un bloc central polyisobutylène et des blocs adjacents constitués d'au moins un monomère polymérisé, autre qu'un monomère styrénique, le taux dudit élastomère thermoplastique à blocs étant compris dans un domaine allant de plus de 50 à 100 pce (parties en poids pour 100 parties en poids d'élastomère), et étant entendu que la température de transition vitreuse dudit polymère non styrénique constituant le bloc thermoplastique de l'élastomère thermoplastique à blocs est supérieure ou égale à 60°C, et, dans le cas d'un bloc thermoplastique semi cristallin, une température de fusion supérieure à 60°C,
   - et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce,
étant entendu qu'au moins 5 pce des élastomères thermoplastiques présents dans la deuxième couche sont compatibles avec au moins 5 pce des élastomères thermoplastiques à blocs présents dans la première couche.

Cette compatibilité permet d'avoir une adhésion satisfaisante entre les deux couches du stratifié multicouche de l'invention. Par rapport aux solutions de l'art antérieur, l'invention est d'une grande simplicité puisqu'elle permet de s'affranchir d'une couche dont la seule fonction serait l'adhésion de la couche étanche sur la couche diénique et ainsi de ne pas alourdir le pneumatique et donc de ne pas augmenter sa résistance au roulement.

Un autre avantage majeur de l'invention est de permettre une économie de matériaux puisque qu'au lieu d'utiliser une couche élastomérique supplémentaire pour l'adhésion, l'invention permet à une couche majoritairement diénique (comme les compositions des pneumatiques conventionnels) d'adhérer à une couche étanche comprenant un élastomère thermoplastique à blocs, comportant au moins un bloc central polyisobutylène et des blocs adjacents constitués d'au moins un monomère polymérisé, autre qu'un monomère styrénique. Cette économie est par ailleurs très favorable à la préservation de l'environnement.

De plus, la formulation des couches de ce stratifié permet une fabrication post cuisson, c'est-à-dire une application de la première couche du stratifié sur la deuxième couche après cuisson de cette dernière. Ainsi par exemple, la première couche, peut être appliquée sur la deuxième couche, après cuisson d'un pneumatique muni de ladite deuxième couche comme couche radialement interne du pneumatique ; en particulier, cette application de la première couche est possible sans qu'aucun traitement ne soit nécessaire sur la deuxième couche.

De préférence, l'invention concerne un stratifié tel que défini ci-dessus, dans lequel la masse moléculaire moyenne en nombre de l'élastomère thermoplastique à blocs de la première couche est comprise entre 30 000 et 500 000 g/mol.

De préférence également, l'invention concerne un stratifié tel que défini ci-dessus, dans lequel dans lequel les blocs thermoplastiques de l'élastomère thermoplastique à blocs de la première couche sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

De préférence également, l'invention concerne un stratifié tel que défini ci-dessus, dans lequel le taux d'élastomère thermoplastique à blocs dans la composition de la première couche est compris dans un domaine allant de 70 à 100 pce ; plus préférentiellement, de 80 à 100 pce.

Préférentiellement, l'invention concerne un stratifié tel que défini ci-dessus, dans lequel l'élastomère thermoplastique est le seul élastomère de la première couche.

De manière préférentielle, l'invention concerne un stratifié tel que défini ci-dessus, dans lequel le système plastifiant de la première couche comprend de 2 à 30 pce, et de préférence de 5 à 20 pce d'une huile plastifiante.

De manière préférentielle également, l'invention concerne un stratifié tel que défini ci-dessus, dans lequel l'huile plastifiante de la première couche est choisie dans le groupe constitué par les huiles polyoléfiniques, les huiles paraffiniques, les huiles naphténiques, les huiles aromatiques, les huiles minérales et les mélanges de ces huiles. Préférentiellement, l'huile plastifiante de la première couche est une huile polybutène, et préférentiellement une huile polyisobutylène.

Préférentiellement, l'invention concerne un stratifié tel que défini ci-dessus, dans lequel le système plastifiant de la première couche comprend de 2 à 30 pce, et de préférence de 5 à 20 pce de résine hydrocarbonée.

De préférence, l'invention concerne un stratifié tel que défini ci-dessus, dans lequel la résine hydrocarbonée de la première couche est choisie dans le groupe constitué par les résines d'homopolymère ou copolymère de cyclopentadiène ou dicyclopentadiène, les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Préférentiellement, la résine hydrocarbonée de la première couche est choisie dans le groupe constitué par les résines de copolymère de deux monomères vinylaromatiques différents, (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines. Plus préférentiellement, la résine hydrocarbonée de la première couche est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, les résines de copolymère styrène/ alphaméthylstyrène, et les mélanges de ces résines. Très préférentiellement, la résine hydrocarbonée de la première couche est une résine de copolymère styrène/ alphaméthylstyrène.

De manière préférentielle, l'invention concerne un stratifié tel que défini ci-dessus, dans lequel le taux total de plastifiant est compris dans un domaine allant de 5 à 45 pce. Préférentiellement, le taux total de plastifiant est compris dans un domaine allant de 10 à 35 pce.

Préférentiellement également, l'invention concerne un stratifié tel que défini ci-dessus, dans lequel la première couche comprend en outre une charge lamellaire.

De préférence, l'invention concerne un stratifié tel que défini ci-dessus, dans lequel la première couche ne contient pas de système de réticulation.

De préférence également, l'invention concerne un stratifié tel que défini ci-dessus, dans lequel la masse moléculaire moyenne en nombre des élastomères thermoplastiques de la deuxième couche est comprise entre 30 000 et 500 000 g/mol.

De manière préférentielle, l'invention concerne un stratifié tel que défini ci-dessus, dans lequel les blocs élastomères des élastomères thermoplastiques (TPE) de la deuxième couche sont choisis parmi les élastomères ayant une température de transition vitreuse inférieure à 25°C.

De manière préférentielle également, l'invention concerne un stratifié tel que défini ci-dessus, dans lequel les blocs élastomères des élastomères thermoplastiques (TPE) de la deuxième couche sont choisis dans le groupe constitué par les élastomères éthyléniques, les élastomères diéniques et leurs mélanges. Selon un mode préférentiel, les blocs élastomères des élastomères thermoplastiques (TPE) de la deuxième couche sont choisis parmi les élastomères éthyléniques. Selon un autre mode préférentiel, les blocs élastomères des élastomères thermoplastiques (TPE) de la deuxième couche sont choisis parmi les élastomères diéniques.

Préférentiellement, l'invention concerne un stratifié tel que défini ci-dessus, dans lequel les blocs thermoplastiques des élastomères thermoplastiques de la deuxième couche sont choisis parmi les polymères ayant une température de transition vitreuse supérieure à 60°C et, dans le cas d'un bloc thermoplastique semi cristallin, une température de fusion supérieure à 60°C.

Plus préférentiellement, l'invention concerne un stratifié tel que défini ci-dessus, dans lequel, les blocs thermoplastiques des élastomères thermoplastiques de la deuxième couche sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

De préférence, l'invention concerne un stratifié tel que défini ci-dessus, dans lequel le taux d'élastomère thermoplastique (TPE) dans la composition de la deuxième couche est compris dans un domaine allant de 5 à 45 pce, et plus préférentiellement, de 10 à 40 pce.

De manière préférentielle, l'invention concerne un stratifié tel que défini ci-dessus, dans lequel l'élastomère diénique de la deuxième couche est choisi dans le groupe constitué par les élastomères diéniques essentiellement insaturés, et les mélanges de ces élastomères. Préférentiellement, l'élastomère diénique de la deuxième couche est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Plus préférentiellement, l'élastomère diénique de la deuxième couche est choisi dans le groupe constitué par les polybutadiènes, les polyisoprènes de synthèse, le caoutchouc naturel, les copolymères de butadiène, les copolymères d'isoprène et les mélanges de ces élastomères.

De préférence, l'invention concerne un stratifié tel que défini ci-dessus, dans lequel la deuxième couche comprend une charge renforçante. Préférentiellement, la charge renforçante de la deuxième couche est du noir de carbone et/ou de la silice. Plus préférentiellement, la charge renforçante majoritaire de la deuxième couche est un noir de carbone.

L'invention concerne également un pneumatique comportant un stratifié tel que défini ci-dessus.

De plus, l'invention concerne également, l'utilisation dans un objet pneumatique d'un stratifié tel que défini précédemment.

L'invention concerne plus particulièrement les stratifiés tels que définis ci-dessus, utilisés dans des pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et diéniques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Pour les besoins de la présente invention, il est précisé que dans la présente demande de brevet, on dénomme « couche thermoplastique » une couche élastomérique comprenant, en poids, une plus grande quantité d'élastomère(s) thermoplastique(s) que d'élastomère(s) diénique(s) ; et on dénomme « couche diénique » une couche élastomérique comprenant, en poids, une plus grande quantité d'élastomère(s) diénique(s) que d'élastomère(s) thermoplastique(s). La couche étanche du stratifié selon l'invention, comportant majoritairement un élastomère thermoplastique à blocs, comportant au moins un bloc central polyisobutylène et des blocs adjacents constitués d'au moins un monomère polymérisé, autre qu'un monomère styrénique, est bien une couche thermoplastique telle que définie ci-dessus.

Le stratifié selon l'invention présente une excellente adhésion entre les deux couches, dénommées pour le besoin de clarté de l'invention première et deuxième couches (ou respectivement, couche thermoplastique étanche et couche diénique). Ainsi, selon l'invention, la couche thermoplastique étanche telle que définie ci-dessus peut adhérer avec une couche diénique telle que définie ci-dessus, grâce à la présence d'une certaine quantité de TPE dans cette couche diénique, compatible avec une certaine quantité de TPE dans la couche thermoplastique.

Au sens de la présente invention, des élastomères thermoplastiques sont compatibles, lorsqu'ils présentent, en mélange (de ces deux élastomères thermoplastiques entre eux), une température de transition vitreuse ou, dans le cas de blocs thermoplastiques semi cristallins, une température de fusion unique pour la partie thermoplastique du mélange.

Les détails de l'invention seront explicités ci-dessous, par la description dans un premier temps, des constituants communs éventuels des deux couches du stratifié de l'invention puis, dans un deuxième temps, par la description des éléments spécifiques de chacune des couches du stratifié de l'invention, et enfin par la description de l'adhésion entre les deux couches du stratifié selon l'invention.

Le stratifié étanche selon l'invention a pour caractéristique essentielle d'être pourvu d'au moins deux couches élastomériques dites « couche thermoplastique étanche » et « couche diénique » de formulations différentes, lesdites couches dudit stratifié comprenant au moins un élastomère thermoplastique (TPE) tel que défini ci-après, dont l'élastomère thermoplastique à blocs, comportant au moins un bloc central polyisobutylène et des blocs adjacents constitués d'au moins un monomère polymérisé, autre qu'un monomère styrénique, dans la couche étanche. En plus de l'élastomère thermoplastique à blocs, comportant au moins un bloc central polyisobutylène et des blocs adjacents constitués d'au moins un monomère polymérisé, autre qu'un monomère styrénique, la couche étanche comprend un système plastifiant dont la composition sera détaillée ci-après. En plus de l'élastomère thermoplastique (TPE), la couche diénique comprend également un élastomère diénique, sa composition sera détaillée dans ce qui suit.

### I- Composition de la couche étanche du stratifié de l'invention

La première couche, étanche à l'air ou plus généralement tout gaz de gonflage, comprend plus de 50 pce d'un élastomère thermoplastique (TPE) à blocs, comportant au moins un bloc central polyisobutylène et des blocs adjacents constitués d'au moins un monomère polymérisé, autre qu'un monomère styrénique (en abrégé élastomère thermoplastique isobutylénique et non styrénique ou « TPE-IB-NS »), et un système plastifiant.

### 1-1. Elastomère thermoplastique isobutylénique et non styrénique ou « TPE-IB-NS »

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique TPE-IB-NS utilisé pour la mise en oeuvre de l'invention est un copolymère à blocs dont la nature chimique des blocs thermoplastiques et élastomères peut varier.

### I-1.1. Structure du TPE-IB-NS

La masse moléculaire moyenne en nombre (notée Mn) du TPE-IB-NS est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE-IB-NS, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour stratifié multicouche de pneumatique.

La masse moléculaire moyenne en nombre (Mn) de l'élastomère TPE-IB-NS est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE-IB-NS, il s'agit de la Tg relative au bloc élastomère. Le TPE-IB-NS présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances du stratifié multicouche lors d'une utilisation à très basse température ; pour une telle utilisation, la Tg du TPE-IB-NS est plus préférentiellement encore inférieure ou égale à -10°C. De manière préférentielle également, la Tg du TPE-IB-NS est supérieure à - 100°C.

Comme de manière connue pour les TPE, les TPE-IB-NS présentent deux pics de température de transition vitreuse (Tg, mesurée selon ASTM D3418), la température la plus basse, étant relative à la partie élastomère du TPE-IB-NS, et la température la plus haute, étant relative à la partie thermoplastique du TPE-IB-NS. Ainsi, les blocs souples des TPE-IB-NS se définissent par une Tg inférieure à la température ambiante (25°C), tandis que les blocs rigides ont une Tg supérieure à 60°C.

Pour être de nature à la fois élastomère et thermoplastique, le TPE-IB-NS doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE-IB-NS sont préférentiellement des copolymères avec un petit nombre de blocs (moins de 5, typiquement 3), auquel cas ces blocs ont de préférence des masses élevées, supérieures à 15000 g/mol. Ces TPE-IB-NS peuvent être par exemple des copolymères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités amides et unités isobutylène pour un copolymère blocs amide/ isobutylène/ amide). On dira par convention que le bloc polyisobutylène est central dans le TPE-IB-NS.

Selon une première variante, le TPE-IB-NS se présente sous une forme linéaire. Par exemple, le TPE-IB-NS est un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère.

Selon une autre variante de l'invention, le TPE-IB-NS utile pour les besoins de l'invention se présente sous une forme étoilée à au moins trois branches. Par exemple, le TPE-IB-NS peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE-IB-NS se présente sous une forme branchée ou dendrimère. Le TPE-IB-NS peut alors se composer d'un bloc élastomère branché ou dendrimère et d'un bloc thermoplastique, situé à l'extrémité des branches du bloc élastomère dendrimère.

### I-1.2. Nature des blocs élastomères isobutyléniques

Les blocs élastomères du TPE-IB-NS pour les besoins de l'invention, sont des blocs polyisobutylène, c'est-à-dire que ce bloc élastomère du TPE-IB-NS est de préférence composé majoritairement d'unités isobutyléniques. Par majoritairement, on entend un taux pondéral en monomère isobutylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères isobutyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Selon une variante, les monomères isobutyléniques polymérisés pour former la partie élastomère du TPE-IB-NS peuvent être copolymérisés, de manière statistique, avec au moins un autre monomère de manière à former un bloc élastomère. Selon cette variante, la fraction molaire en monomère polymérisé autre qu'un monomère isobutylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

Selon un mode de réalisation préférentiel de l'invention, les blocs élastomères du TPE-IB-NS présentent au total, une masse moléculaire moyenne en nombre ("Mn") allant de 25 000 g/mol à 350 000g/mol, de préférence de 35 000 g/mol à 250 000 g/mol de manière à conférer au TPE-IB-NS de bonnes propriétés élastomériques et une tenue mécanique suffisante et compatible avec l'utilisation en stratifié multicouche de pneumatique.

Le bloc élastomère peut également être un bloc comprenant en plus des monomères isobutyléniques, plusieurs types de monomères éthyléniques, diéniques ou styréniques tels que définis ci-dessus.

Le bloc élastomère peut également être constitué de plusieurs blocs élastomères tels que définis ci-dessus.

### I-1.3. Nature des blocs thermoplastiques non styréniques

Les TPE-IB-NS comprennent, en plus du bloc élastomère isobutylénique central, au moins deux blocs thermoplastiques adjacents, constitués d'au moins un monomère polymérisé, autre qu'un monomère styrénique (dit blocs thermoplastique non styréniques). Par monomère polymérisé autre qu'un monomère styrénique doit être entendu dans la présente description, tout monomère, autre qu'un monomère styrénique, polymérisé selon des techniques connues de l'homme du métier et pouvant conduire à la préparation d'un élastomère thermoplastique à blocs tel qu'utilisé pour la mise en oeuvre de l'invention. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en oeuvre.

Pour les besoins de l'invention, les élastomères TPE-IB-NS comprennent un ou plusieurs bloc(s) thermoplastique(s) ayant de préférence une Tg (ou Tf, le cas échéant) supérieure ou égale à 60°C et constitué(s) à partir de monomères polymérisés. Préférentiellement, ce bloc thermoplastique a une Tg (ou Tf, le cas échéant) comprise dans un domaine variant de 60°C à 250°C. De préférence, la Tg (ou Tf, le cas échéant) de ce bloc thermoplastique est préférentiellement de 70°C à 200°C, plus préférentiellement de 80°C à 180°C.

La proportion des blocs thermoplastiques par rapport au TPE-IB-NS, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 60°C sont préférentiellement présents dans des proportions suffisantes pour préserver le caractère thermoplastique de l'élastomère utile à l'invention. Le taux minimum de blocs thermoplastiques ayant une Tg (ou Tf, le cas échéant) supérieure ou égale à 60°C dans le TPE-IB-NS peut varier en fonction des conditions d'utilisation du copolymère. D'autre part, la capacité du TPE-IB-NS à se déformer lors de la préparation du pneu peut également contribuer à déterminer la proportion des blocs thermoplastiques ayant une Tg (ou Tf, le cas échéant) supérieure ou égale à 60°C.

Les blocs thermoplastiques ayant une Tg (ou Tf, le cas échéant) supérieure ou égale à 60°C peuvent être constitués à partir de monomères polymérisés de diverses natures, notamment, ils peuvent constituer les blocs suivants ou leurs mélanges :
- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 60°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère. Lorsque le co-monomère est de type styrénique, il doit représenter moins de 5% massique du bloc thermoplastique pour que le TPE-IB-NS soit considéré comme non styrénique.

Selon l'invention, les blocs thermoplastiques du TPE-IB-NS présentent au total, une masse moléculaire moyenne en nombre ("Mn") allant de 5 000 g/mol à 150 000g/mol, de manière à conférer au TPE-IB-NS de bonnes propriétés élastomériques et une tenue mécanique suffisante et compatible avec l'utilisation en stratifié multicouche de pneumatique.

Le bloc thermoplastique peut également être constitué de plusieurs blocs thermoplastiques tels que définis ci-dessus.

### I-1.4. Préparation des TPE-IB-NS

Les élastomères thermoplastiques TPE-IB-NS peuvent être préparés par des procédés de synthèse connus. L'homme de l'art saura choisir les conditions de polymérisation adéquates et réguler les différents paramètres des procédés de polymérisation afin d'aboutir aux caractéristiques spécifiques de structure de l'élastomère thermoplastique à blocs utile pour la mise en oeuvre de l'invention.

Plusieurs stratégies de synthèse peuvent être mises en oeuvre en vue de préparer les copolymères utiles à la mise en oeuvre de l'invention.

Une première consiste en une première étape de synthèse du bloc « polyisobutylène » par polymérisation cationique vivante des monomères à polymériser au moyen d'un amorceur mono-fonctionnel, di-fonctionnel ou poly-fonctionnel connu de l'homme de l'art, suivie de la seconde étape de synthèse du ou des blocs thermoplastiques ayant une Tg supérieure ou égale à 60°C et par ajout du monomère à polymériser sur le polyisobutylène vivant obtenu dans la première étape. Ainsi, ces deux étapes sont consécutives, ce qui se traduit par l'ajout séquencé :
- des monomères à polymériser pour la préparation du bloc « polyisobutylène » ;
- des monomères à polymériser pour la préparation du ou des blocs thermoplastiques ayant une Tg supérieure ou égale à 60°C.

A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.

Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur di-fonctionnel ou polyfonctionnel et éventuellement d'un acide de Lewis jouant le rôle de co-amorceur afin de former in situ un carbocation. Habituellement, sont ajoutés des composés électro-donneurs afin de conférer à la polymérisation un caractère vivant.

A titre d'illustration, les amorceurs di-fonctionnels ou polyfonctionnels utilisables pour la préparation des copolymères utiles à l'invention peuvent être choisis parmi le 1,4-di(2-méthoxy-2-propyl)-benzène (ou « dicumylméthyl éther »), le 1,3,5-tri(2-méthoxy-2-propyl)-benzène (ou « tricumylméthyléther »), le 1,4-di(2-chloro-2-propyl)-benzène (ou « dicumyl chloride »), le 1,3,5-tri(2-chloro-2-propyl)-benzène (ou « tricumyl chloride »), le 1,4-di(2-hydroxy-2-propyl)-benzène, le 1,3,5-tri(2-hydroxy-2-propyl)-benzène, le 1,4-di(2-acétoxy-2-propyl)-benzène, le 1,3,5-tri(2-acétoxy-2-propyl)-benzène, le 2,6-dichloro-2,4,4,6-tetraméthylheptane, le 2,6-dihydroxy-2,4,4,6-heptane. A titre préférentiel, sont utilisés les dicumyl éthers, les tricumyl éthers, les halogénures de dicumyle ou les halogénures de tricumyle.

Les acides de Lewis peuvent être choisis parmi les halogénures de métaux, de formule générale MXn où M est un élément choisi parmi Ti, Zr, Al, Sn, P, B, et X est un halogène tel que Cl, Br, F ou I et n correspondant au degré d'oxydation de l'élément M. On citera par exemple TiCl₄, AlCl₃, BCl₃, BF₃, SnCl₄, PCl₃, PCl₅. Parmi ces composés TiCl₄, AlCl₃ et BCl₃ sont utilisés à titre préférentiel, et TiCl₄ à titre encore plus préférentiel.

Les composés électro-donneurs peuvent être choisis parmi les bases de Lewis connues, tels que les pyridines, les aminés, les amides, les esters, les sulfoxydes et autres. Parmi eux sont préférés le DMSO (diméthylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse des copolymères utiles à l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse des copolymères utiles à l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou trichloro).

L'homme de l'art saura choisir la composition des mélanges de monomères à utiliser en vue de préparer les copolymères élastomériques thermoplastiques à blocs utiles à l'invention ainsi que les conditions de température adéquates en vue d'atteindre les caractéristiques de masses molaires de ces copolymères.

A titre d'exemple illustratif mais non limitatif, et afin de mettre en oeuvre cette première stratégie de synthèse, l'homme de l'art pourra se référer aux documents suivants pour la synthèse d'un élastomère thermoplastique à blocs à base d'isobutylène et de :
- acénaphtylène : l'article de Z. Fodor et J.P. Kennedy, Polymer Bulletin 1992 29(6) 697-705 ;
- indène : le document de brevet US4946899 par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577
- isoprène : les documents G. Kaszas, J.E. Puskas, .P. Kennedy Applied Polymer Science (1990) 39(1) 119-144 et J.E. Puskas, G. Kaszas,J.P. Kennedy, Macromolecular Science, Chemistry A28 (1991) 65-80.

Une deuxième stratégie de synthèse consiste à préparer séparément :
- un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou poly-fonctionnel, suivie éventuellement d'une réaction de fonctionnalisation sur une ou plusieurs extrémités de chaînes,
- le ou les blocs thermoplastiques vivants par exemple par polymérisation anionique, et ayant une Tg supérieure ou égale à 60°C,
- puis à faire réagir l'un et l'autre pour l'obtention d'un élastomère thermoplastique à blocs utile à la mise en oeuvre de l'invention. La nature des fonctions réactives à au moins une des extrémités de chaînes du bloc « polyisobutylène » et la proportion de chaînes vivantes du polymère constituant le bloc thermoplastique ayant une Tg supérieure ou égale à 60°C, par rapport à la quantité de ces fonctions réactives seront choisies par l'homme de l'art pour l'obtention d'un élastomère thermoplastique à blocs utile à la mise en oeuvre de l'invention.

Une troisième stratégie de synthèse consiste à réaliser dans cet ordre :
- la synthèse d'un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou polyfonctionnel ;
- la modification en bout de chaîne de ce « polyisobutylène » de manière à introduire une unité monomère pouvant être lithiée ;
- éventuellement, l'ajout supplémentaire d'une unité monomère pouvant être lithiée et conduire à une espèce capable d'initier une polymérisation anionique, tel que par exemple le 1,1-diphényléthylène ;
- enfin, l'ajout du monomère polymérisable et d'éventuels co-monomères par voie anionique.

A titre d'exemple pour la mise en oeuvre d'une telle stratégie de synthèse, l'homme de l'art pourra se référer à la communication de Kennedy et Price, ACS Symposium, 1992, 496, 258-277 ou à l'article de Faust et al. : Facile synthesis of diphenylethylene end-functional polyisobutylene and its applications for the synthesis of block copolymers containing poly(methacrylate)s, par Dingsong Feng, Tomoya Higashihara and Rudolf Faust, Polymer, 2007, 49(2), 386-393).

L'halogénation du copolymère utile à l'invention est réalisée selon toute méthode connue de l'homme de l'art, notamment celles utilisées pour l'halogénation du caoutchouc butyl et peut se faire par exemple au moyen de brome ou de chlore, préférentiellement du brome, sur les unités issues de diènes conjugués de la chaîne polymérique du bloc « polyisobutylène » et/ou du ou des blocs thermoplastiques.

Dans certaines variantes de l'invention selon lesquelles l'élastomère thermoplastique est étoilé ou encore branché, les procédés décrits par exemple dans les articles de Puskas J. Polym. Sci Part A : Polymer Chemistry, vol 36, pp85-82 (1998) et Puskas, J. Polym. Sci Part A : Polymer Chemistry, vol 43, pp1811-1826 (2005) peuvent être mis en oeuvre par analogie pour obtenir des blocs « polyisobutylène » étoilés, branchés ou dendrimères vivants.

L'homme du métier saura alors choisir la composition des mélanges de monomères à utiliser en vue de préparer les copolymères utiles à l'invention ainsi que les conditions de température adéquates en vue d'atteindre les caractéristiques de masses molaires de ces copolymères.

A titre préférentiel, la préparation des copolymères utiles pour les besoins de l'invention sera réalisée par polymérisation cationique vivante au moyen d'un amorceur difonctionnel ou polyfonctionnel et par ajouts séquencés des monomères à polymériser pour la synthèse du bloc « polyisobutène » et des monomères à polymériser pour la synthèse du ou des blocs thermoplastiques ayant une Tg supérieure ou égale à 60°C.

### I-1.5. Quantité TPE-IB-NS

Le taux de TPE-IB-NS dans la couche thermoplastique (c'est-à-dire le taux total s'il y a plusieurs TPE-IB-NS), est compris dans un domaine allant de plus de 50 à 100 pce. De préférence, le taux de élastomère thermoplastique à blocs, comportant au moins un bloc central polyisobutylène et des blocs adjacents constitués d'au moins un monomère polymérisé, autre qu'un monomère styrénique (TPE-IB-NS), dans la première composition étanche est compris dans un domaine allant de 70 à 100 pce, en particulier compris dans un domaine allant de 80 à 100 pce.

Toutefois, selon un mode de réalisation particulièrement préférentiel, l'élastomère thermoplastique à blocs, comportant au moins un bloc central polyisobutylène et des blocs adjacents constitués d'au moins un monomère polymérisé, autre qu'un monomère styrénique, est le seul élastomère thermoplastique, et plus généralement le seul élastomère présent dans la couche étanche aux gaz ; en conséquence, dans un tel cas, son taux est égal à 100 pce.

La couche étanche aux gaz décrite ci-dessus pourrait éventuellement comporter d'autres élastomères que l'élastomère thermoplastique à blocs, comportant au moins un bloc central polyisobutylène et des blocs adjacents constitués d'au moins un monomère polymérisé, autre qu'un monomère styrénique, dans une quantité minoritaire (inférieure à 50 pce).

De tels élastomères complémentaires pourraient être par exemple des élastomères diéniques tels que définis dans ce qui suit pour la couche diénique du stratifié de l'invention. A titre d'élastomères diéniques utilisables en complément de l'élastomère thermoplastique à blocs précédemment décrit peuvent être cités notamment les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères isoprène-isobutylène (IIR), les copolymères d'isoprène-butadiène-styrène (SBIR) et les mélanges de tels copolymères.

De tels élastomères complémentaires pourraient également être par exemple d'autres élastomères thermoplastiques. A titre d'élastomère TPE utilisable en complément de l'élastomère thermoplastique à blocs précédemment décrit peut être cité notamment un élastomère TPS choisi dans le groupe constitué par les copolymères à blocs styrène/ butadiène/ styrène (SBS), les copolymères à blocs styrène/ isoprène/ styrène (SIS), styrène/ butylène/ styrène, les copolymères à blocs styrène/ butadiène/ isoprène/ styrène (SBIS), les copolymères à blocs styrène/ éthylène/ butylène/ styrène (SEBS), les copolymères à blocs styrène/ éthylène/ propylène/ styrène (SEPS), les copolymères à blocs styrène/ éthylène/ éthylène/ propylène/ styrène (SEEPS), les copolymères à blocs styrène/ éthylène/ éthylène/ styrène (SEES) et les mélanges de ces copolymères. Plus préférentiellement, ledit élastomère TPS complémentaire éventuel est choisi dans le groupe constitué par les copolymères à blocs SEBS, les copolymères à blocs SEPS et les mélanges de ces copolymères.

Dans le cas où d'autres élastomères sont présents, autres que l'élastomère thermoplastique à blocs, comportant au moins un bloc central polyisobutylène et des blocs adjacents constitués d'au moins un monomère polymérisé, autre qu'un monomère styrénique, leur taux total est compris dans un domaine allant de 0 à moins de 50 pce, de préférence de 0 à moins de 30 pce, et plus préférentiellement de 0 à moins de 20 pce.

L'élastomère thermoplastique à blocs, comportant au moins un bloc central polyisobutylène et des blocs adjacents constitués d'au moins un monomère polymérisé, autre qu'un monomère styrénique ci-dessus décrit, est donc suffisant à lui seul pour que soit remplie, dans la première couche élastomère, la fonction d'étanchéité aux gaz vis-à-vis des objets pneumatiques dans lesquels ils sont utilisés.

### I-2. Système plastifiant

Le système plastifiant de la couche étanche du stratifié de l'invention est composé d'une huile plastifiante et d'une résine hydrocarbonée.

La fonction du système plastifiant est de faciliter la mise en oeuvre, particulièrement l'intégration dans un objet pneumatique par un abaissement de la viscosité et une augmentation du pouvoir tackifiant de la couche étanche aux gaz et donc du stratifié de l'invention. Ce système plastifiant comprend une huile plastifiante et une résine hydrocarbonée, le taux total de plastifiant étant compris dans un domaine allant de 2 à 70 pce, préférentiellement de 5 à 45 pce et plus préférentiellement de 10 à 35 pce.

Pour les besoins de la présente invention, les plastifiants, c'est-à-dire l'huile et la résine sont préférentiellement compatibles avec l'élastomère thermoplastique à blocs, comportant au moins un bloc central polyisobutylène et des blocs adjacents constitués d'au moins un monomère polymérisé, autre qu'un monomère styrénique. Par plastifiant compatible avec l'élastomère thermoplastique à blocs, comportant au moins un bloc central polyisobutylène et des blocs adjacents constitués d'au moins un monomère polymérisé, autre qu'un monomère styrénique, on entend un plastifiant (huile ou résine selon le plastifiant considéré) qui présente, en mélange avec l'élastomère thermoplastique à blocs, comportant au moins un bloc central polyisobutylène et des blocs adjacents constitués d'au moins un monomère polymérisé, autre qu'un monomère styrénique, une seule température de transition vitreuse (Tg) pour la partie élastomérique du mélange. Ladite compatibilité des plastifiants avec l'élastomère thermoplastique à blocs, comportant au moins un bloc central polyisobutylène et des blocs adjacents constitués d'au moins un monomère polymérisé, autre qu'un monomère styrénique, permet un effet optimal des plastifiants.

L'huile plastifiante (ou huile d'extension) est utilisée à un taux allant de 1 à 40 pce, pce signifiant parties en poids pour cent parties d'élastomère total (i.e., élastomère thermoplastique à blocs, comportant au moins un bloc central polyisobutylène et des blocs adjacents constitués d'au moins un monomère polymérisé, autre qu'un monomère styrénique ci-dessus plus élastomères complémentaires le cas échéant) présent dans la première couche étanche.

En dessous du minimum indiqué, la couche étanche aux gaz et donc le stratifié multicouche risquent de présenter une viscosité trop forte pour être déposée sur la couche diénique après cuisson de cette dernière, et pénétrer dans les anfractuosités de la couche diénique, tandis qu'au-delà du maximum préconisé, on s'expose à un fluage à froid trop important susceptible d'entrainer des mouvements de matières indésirables par centrifugation lors de la mise en rotation du pneu.

Pour ces raisons, on préfère que l'huile d'extension soit utilisée à un taux allant de 2 à 30 pce et plus préférentiellement de 5 à 20 pce.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales et les mélanges de ces huiles.

On utilise préférentiellement des huiles polybutènes, particulièrement des huiles polyisobutylènes (en abrégé "PIB") qui ont démontré le meilleur compromis de propriétés comparativement aux autres huiles testées, notamment à des huiles du type paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"), par INEOS Oligomer sous la dénomination "Indopol H1200". Des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche thermoplastique étanche aux gaz, notamment de l'objet pneumatique dans lequel elle est destinée à être utilisée.

Egalement le système plastifiant de la première couche du stratifié de l'invention comprend une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions de polymères auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"), température à laquelle le produit, par exemple sous forme de poudre, s'agglutine. La température de ramollissement d'une résine hydrocarbonée est généralement supérieure d'environ 50 à 60°C à sa valeur de Tg.

Dans le système plastifiant, la résine est utilisée à un taux pondéral allant de 1 à 40 pce. En dessous de 1 pce, l'effet de la résine est peu remarquable, alors qu'au-delà de 40 pce, on s'expose à une augmentation simultanée de l'hystérèse. Pour ces raisons, le taux de résine est préférentiellement de 2 à 30 pce et de manière très préférentielle de 5 à 20 pce.

Selon un mode de réalisation préférentiel de l'invention, la résine hydrocarbonée présente au moins une quelconque, plus préférentiellement l'ensemble des caractéristiques suivantes :
- une Tg supérieure à 10°C, et plus préférentiellement supérieure à 30°C ;
- un point de ramollissement supérieur à 50°C, préférentiellement supérieur à 80°C (en particulier compris entre 80°C et 160°C) ;
- une masse molaire moyenne en nombre (Mn) comprise entre 200 et 3000 g/mol ;
- un indice de polymolécularité (Ip) inférieur ou égal à 4 (rappel : Ip = Mw/Mn avec Mw masse molaire moyenne en poids).

Plus préférentiellement, cette résine hydrocarbonée présente au moins une quelconque, plus préférentiellement l'ensemble des caractéristiques suivantes :
- une Tg comprise entre 30°C et 120°C (notamment entre 35°C et 105°C) ;
- un point de ramollissement supérieur à 90°C, en particulier compris entre 110°C et 150°C ;
- une masse moyenne Mn comprise entre 400 et 1500 g/mol ;
- un indice de polymolécularité Ip inférieur à 3 et en particulier inférieur à 2.

Le point de ramollissement est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère de deux monomères vinylaromatiques différents, (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, les résines de copolymère styrène/ alphaméthylstyrène, et les mélanges de ces résines. De manière très préférentielle, la résine est une résine de copolymère styrène/ alphaméthylstyrène.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, par la société Struktol sous dénomination "40 MS" ou "40 NS" (mélanges de résines aromatiques et/ou aliphatiques), par la société Eastman, sous la dénomination "Eastotac", telles que "Eastotac H-142W" pour ce qui concerne les résines d'hydrocarbone aliphatique hydrogénées, ou encore par la société Arizona sous la dénomination « Sylvares SA 140 » pour les résines styrène/ alphaméthylstyrène.

### 1-3. Charges lamellaires

Les élastomères et plastifiants décrits précédemment sont suffisants à eux seuls pour que soit utilisable le stratifié multicouche selon l'invention, néanmoins une charge lamellaire peut être utilisée dans la composition de la couche étanche du stratifié de l'invention.

L'utilisation préférentielle de charge lamellaire, permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais *"platy fillers"*) sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organe clays"*).

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R.Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges lamellaires décrites ci-dessus sont préférentiellement utilisées à un taux volumique compris préférentiellement entre 0% et 50%, plus préférentiellement entre 1% et 50%, encore plus préférentiellement entre 5 et 50%.

Selon un mode de réalisation particulier, le taux de charge lamellaire dans la composition est, de préférence au moins égal à 10% en volume de composition élastomère. Un tel taux volumique correspond typiquement, compte tenu de la densité moyenne des charges lamellaires utilisées (typiquement entre 2,0 et 3,0) et de celle des élastomères TPE utilisés, à un taux pondéral supérieur à 20 pce, de préférence au moins égal à 40 pce.

Pour augmenter encore l'étanchéité de la couche d'élastomère TPE, on peut utiliser un taux de charge lamellaire encore supérieur, au moins égal à 15% voire 20% en volume, ce qui correspond typiquement à des taux pondéraux au moins égaux à 50 pce voire 80 pce. Des taux pondéraux supérieurs à 100 pce sont même avantageusement possibles.

Le taux de charge lamellaire est toutefois préférentiellement inférieur à 50% en volume (typiquement inférieur à 500 pce), limite supérieure à partir de laquelle on peut être exposé à des problèmes d'augmentation du module, de fragilisation de la composition, difficultés de dispersion de la charge et de mise en oeuvre, sans parler d'une pénalisation possible de l'hystérèse.

L'introduction des charges lamellaires dans la composition thermoplastique élastomère peut être réalisée selon divers procédés connus, par exemple par mélangeage en solution, par mélangeage en masse dans un mélangeur interne, ou encore par mélangeage par extrusion.

### 1-4. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges lamellaires précédemment décrites, des agents colorants avantageusement utilisables pour la coloration de la composition, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

De manière préférentielle, la couche thermoplastique étanche du stratifié multicouche ne contient pas tous ces additifs en même temps et de préférentiellement dans certains cas, le stratifié multicouche ne contient aucun de ces agents.

Egalement et à titre optionnel, la composition des couches du stratifié multicouche de l'invention peut contenir un système de réticulation connu de l'homme du métier. Préférentiellement, la composition ne contient pas de système de réticulation.

Outre les élastomères précédemment décrits, les compositions du stratifié multicouche peuvent aussi comporter, toujours selon une fraction pondérale minoritaire par rapport à l'élastomère blocs, un ou plusieurs polymères thermoplastiques (non élastomériques), tels que ceux à base de polyéther.

### II- Composition la couche diénique du stratifié l'invention

### II-1. Elastomère thermoplastique (TPE)

La deuxième couche, diénique, comprend un TPE, toujours selon une fraction minoritaire de ses élastomères.

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

### II-1.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour stratifié multicouche de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances du stratifié multicouche lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 60°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### II-1.2. Nature des blocs élastomères

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes, tels que les blocs polyisobutylène, polybutylène, polyéthylène, polypropylène ou encore tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en stratifié multicouche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

### II-1.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 60°C et constitué(s) à partir de monomères polymérisés. Préférentiellement, ce bloc thermoplastique a une Tg (ou Tf, le cas échéant) comprise dans un domaine variant de 60°C à 250°C. De préférence, la Tg (ou Tf, le cas échéant) de ce bloc thermoplastique est préférentiellement de 70°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 60°C sont préférentiellement présents dans des proportions suffisantes pour préserver le caractère thermoplastique de l'élastomère utile à l'invention. Le taux minimum de blocs thermoplastiques ayant une Tg (ou Tf, le cas échéant) supérieure ou égale à 60°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 60°C.

Les blocs thermoplastiques ayant une Tg (ou Tf, le cas échéant) supérieure ou égale à 60°C peuvent être constitués à partir de monomères polymérisés de diverses natures, notamment, ils peuvent constituer les blocs suivants ou leurs mélanges :
- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 60°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité du stratifié multicouche peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en stratifié multicouche de pneumatique.

Le bloc thermoplastique peut également être constitué de plusieurs blocs thermoplastiques tels que définis ci-dessus.

### II-1.4. Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein des couches du stratifié multicouche selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

De préférence, l'élastomère TPE est un élastomère thermoplastique à blocs, comportant au moins un bloc central polyisobutylène et des blocs adjacents constitués d'au moins un monomère polymérisé, autre qu'un monomère styrénique, c'est-à-dire un TPE-IB-NS tel que décrit précédemment pour la composition étanche du stratifé.

### II-1.5. Quantité de TPE

Le taux de TPE dans la deuxième couche (c'est-à-dire le taux total s'il y a plusieurs TPE), est compris dans un domaine allant de 5 à moins de 50 pce, en particulier compris dans un domaine allant de 5 à 45 pce et plus particulièrement dans un domaine allant de 10 à 40 pce. En dessous du taux minimum de TPE, l'effet adhésif n'est pas suffisant tandis qu'au-delà du maximum préconisé, les propriétés de la couche diénique sont trop altérées par la forte présence de TPE.

### II-2 Elastomère diénique

La composition de la couche diénique comprend plus d'élastomère(s) diénique(s) que d'élastomère(s) thermoplastique(s).

Ainsi, la composition de la couche diénique comporte au moins un (c'est-à-dire un ou plusieurs) élastomère diénique, pouvant être utilisé seul, ou en coupage avec au moins un (c'est-à-dire un ou plusieurs) autre élastomère (ou caoutchouc) diénique.

Par élastomère ou caoutchouc « diénique », doit être compris de manière connue un (on entend un ou plusieurs) élastomère issu au moins en partie (i.e. un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication du stratifié multicouche selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Le taux d'élastomère diénique (c'est-à-dire le taux total s'il y en a plusieurs) dans cette deuxième couche est compris entre 50 et 95 pce. Selon un mode de réalisation préférentiel de l'invention, le taux d'élastomère diénique (c'est-à-dire le taux total s'il y en a plusieurs) est préférentiellement compris dans un domaine allant de 55 à 95 pce et plus préférentiellement de 60 à 90 pce.

### II-3. Charges nanométriques (ou renforçantes)

Les élastomères décrits précédemment sont suffisants à eux seuls pour que soit utilisable le stratifié multicouche selon l'invention, néanmoins une charge renforçante peut être utilisée dans la composition de la couche diénique du stratifié de l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

### II-4. Additifs divers

La couche diénique du stratifié multicouche de l'invention peut comporter par ailleurs les divers additifs usuellement présents dans les couches élastomériques de pneumatique connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure du pneumatique. Egalement et à titre préférentiel, la composition de la couche diénique contient un système de réticulation connu de l'homme du métier.

Optionnellement également, la composition des couches du stratifié multicouche de l'invention peut contenir un agent plastifiant, tel qu'une huile d'extension (ou huile plastifiante) ou une résine plastifiante dont la fonction est de faciliter la mise en oeuvre de le stratifié multicouche, particulièrement son intégration au pneumatique par un abaissement du module et une augmentation du pouvoir tackifiant.

### III- Adhésion des deux couches du stratifié

On a constaté que l'adhésion de la première couche à la deuxième couche dans le stratifié de l'invention, est nettement améliorée par rapport à l'adhésion d'une couche du type de la première couche du stratifié de l'invention à une couche diénique conventionnelle (c'est à dire dépourvue d'élastomère thermoplastique).

Cette adhésion s'exprime par la compatibilité des TPE présents dans les couches du stratifié de l'invention. Ainsi, pour les besoin de l'invention, il est essentiel qu'au moins 5 pce (et plus préférentiellement encore 10 pce) des élastomères thermoplastiques présents dans la deuxième couche soient compatibles avec au moins 5 pce des élastomères thermoplastiques (TPE-IB-NS) présents dans la première couche. Comme indiqué précédemment, des élastomères thermoplastiques sont compatibles, lorsqu'ils présentent, en mélange (de ces élastomères thermoplastiques entre eux), une température de transition vitreuse ou, dans le cas de blocs thermoplastiques semi cristallins, une température de fusion unique pour la partie thermoplastique du mélange.

De préférence, au moins 5 pce (et plus préférentiellement encore 10 pce) des élastomères thermoplastiques présents dans la deuxième couche sont compatibles avec au moins 20 pce des élastomères thermoplastiques (TPE-IB-NS) présents dans la première couche, et plus préférentiellement, au moins 5 pce (et plus préférentiellement encore 10 pce) des élastomères thermoplastiques présents dans la deuxième couche sont compatibles avec au moins 50 pce des élastomères thermoplastiques (TPE-IB-NS) présents dans la première couche.

Plus préférentiellement, au moins 5 pce (et plus préférentiellement encore 10 pce) des élastomères thermoplastiques présents dans la deuxième couche sont de la même nature chimique qu'au moins 5 pce des élastomères thermoplastiques (TPE-IB-NS) présents dans la première couche. Des TPE sont de même nature chimique s'ils comprennent des blocs thermoplastiques comportant les mêmes fonctions chimiques (polyesthers, polyamides...). De préférence, au moins 5 pce (et plus préférentiellement encore 10 pce) des élastomères thermoplastiques présents dans la deuxième couche sont de la même nature chimique qu'au moins 20 pce des élastomères thermoplastiques (TPE-IB-NS) présents dans la première couche, et plus préférentiellement encore, au moins 5 pce (et plus préférentiellement encore 10 pce) des élastomères thermoplastiques présents dans la deuxième couche sont de la même nature chimique qu'au moins 50 pce des élastomères thermoplastiques (TPE-IB-NS) présents dans la première couche.

De manière très préférentielle, au moins 5 pce (et plus préférentiellement encore 10 pce) des élastomères thermoplastiques présents dans la deuxième couche ont des blocs thermoplastiques identiques aux blocs thermoplastiques d'au moins 5 pce des élastomères thermoplastiques (TPE-IB-NS) présents dans la première couche. Préférentiellement, au moins 5 pce (et plus préférentiellement encore 10 pce) des élastomères thermoplastiques présents dans la deuxième couche ont des blocs thermoplastiques identiques aux blocs thermoplastiques d'au moins 20 pce des élastomères thermoplastiques (TPE-IB-NS) présents dans la première couche, et plus préférentiellement, au moins 5 pce (et plus préférentiellement encore 10 pce) des élastomères thermoplastiques présents dans la deuxième couche ont des blocs thermoplastiques identiques aux blocs thermoplastiques d'au moins 50 pce des élastomères thermoplastiques (TPE-IB-NS) présents dans la première couche.

### IV- Préparation du stratifié multicouche

Comme indiqué précédemment, le stratifié multicouches de l'invention a donc pour caractéristique essentielle de comporter au moins deux couches adjacentes d'élastomère :
∘ une première couche, constituée d'une composition à base d'au moins :
   - un élastomère thermoplastique à blocs, comportant au moins un bloc central polyisobutylène et des blocs adjacents constitués d'au moins un monomère polymérisé, autre qu'un monomère styrénique, le taux dudit élastomère thermoplastique à blocs étant compris dans un domaine allant de plus de 50 à 100 pce (parties en poids pour 100 parties en poids d'élastomère), et étant entendu que la température de transition vitreuse dudit polymère non styrénique constituant le bloc thermoplastique de l'élastomère thermoplastique à blocs est supérieure ou égale à 60°C, et, dans le cas d'un bloc thermoplastique semi cristallin, une température de fusion supérieure à 60°C,
   - et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce,
étant entendu qu'au moins 5 pce des élastomères thermoplastiques présents dans la deuxième couche sont compatibles avec au moins 5 pce des élastomères thermoplastiques à blocs présents dans la première couche.

Le stratifié multicouche de l'invention est préparé selon les méthodes connues de l'homme de l'art, en préparant séparément les deux couches du stratifié, puis en associant la couche thermoplastique à la couche diénique, avant ou après la cuisson de cette dernière. L'association de la couche thermoplastique à la couche diénique peut se faire sous l'action de chaleur et éventuellement de pression. La composition de la couche étanche du stratifié de l'invention est ici particulièrement adaptée à une pose de ladite couche étanche après cuisson de la couche diénique du stratifié.

### IV-1. Première couche ou couche thermoplastique étanche

La couche thermoplastique étanche du stratifié multicouche de l'invention est préparée de façon classique, par exemple, par incorporation des différents composants dans une extrudeuse bi-vis, de façon à réaliser la fusion de la matrice et une incorporation de tous les ingrédients, puis utilisation d'une filière plate permettant de réaliser la couche thermoplastique. Plus généralement, la mise en forme de la couche thermoplastique étanche peut être faite par toute méthode connue de l'homme du métier : extrusion, calandrage, extrusion soufflage, injection, cast film.

De préférence, la couche thermoplastique précédemment décrite a une épaisseur supérieure à 0,05 mm, plus préférentiellement comprise entre 0,1 et 10 mm (par exemple de 0,2 à 2 mm).

On comprendra aisément que, selon les domaines d'application spécifiques, les dimensions et les pressions enjeu, le mode de mise en oeuvre de l'invention peut varier, la première couche étanche à l'air comportant en fait plusieurs gammes préférentielles d'épaisseur. Ainsi, par exemple, pour des bandages pneumatiques de type tourisme, elles peuvent avoir une épaisseur d'au moins 0,3 mm, préférentiellement comprise entre 0,5 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

### IV-2. Deuxième couche ou couche diénique

La couche diénique du stratifié multicouche de l'invention est préparée dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, tels que les élastomères TPE, les éventuelles charges, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une couche dénommée dans la présente invention couche diénique.

### IV-3. Préparation du stratifié

Le stratifié multicouche de l'invention est préparé par association de la couche thermoplastique étanche à la couche diénique, avant ou après cuisson de cette dernière. Avant cuisson, cela consiste à poser la couche thermoplastique sur la couche diénique pour former le stratifié de l'invention puis procéder à la cuisson du stratifié ou du pneumatique muni dudit stratifié. Après cuisson, la couche thermoplastique est déposée sur la couche de diénique déjà cuite. Pour que l'adhésion puisse s'établir, il faut une température à l'interface supérieure à la température de mise en oeuvre du TPE, elle-même supérieure à la température de transition vitreuse (Tg) et, dans le cas d'un bloc thermoplastique semi cristallin, à la température de fusion (Tf) dudit TPE, éventuellement associée à l'application de pression.

### V- Utilisation du stratifié dans un pneumatique

Le stratifié de l'invention peut être utilisé dans tout type de pneumatique. Il est particulièrement bien adapté à une utilisation dans un pneumatique, produit fini de pneumatique ou semi-fini de pneumatique, en caoutchouc, tout particulièrement dans un bandage pneumatique pour véhicule automobile tel qu'un véhicule de type deux roues, tourisme ou industriel, ou non automobile tel que vélo.

Le stratifié de l'invention peut être fabriqué en associant les couches du stratifié avant la cuisson, ou même après la cuisson. Plus précisément, la couche thermoplastique ne nécessitant pas de cuisson, elle peut être associée à la couche diénique du stratifié de l'invention avant ou après la cuisson de cette couche diénique, qui elle nécessite une cuisson avant d'être utilisée en pneumatique. Ainsi, la couche étanche du stratifié de l'invention peut être avantageusement assemblée à la couche diénique du stratifié après fabrication et cuisson d'un pneumatique incorporant comme dernière couche radialement interne la couche diénique du stratifié de l'invention. Dans ce cas l'assemblage des deux couches du stratifié de l'invention est donc postérieur à la fabrication du pneumatique incorporant la couche diénique dudit stratifié.

Le stratifié multicouche de l'invention est avantageusement utilisable dans les bandages pneumatiques de tous types de véhicules, en particulier dans les bandages pour véhicules de tourisme susceptibles de rouler à très haute vitesse ou les bandages pour véhicules industriels tels que poids-lourd.

Un tel stratifié est préférentiellement disposé sur la paroi interne de l'objet pneumatique, le recouvrant totalement ou au moins en partie, mais il peut être également intégré complètement à sa structure interne.

Comparativement à une couche d'étanchéité usuelle à base de caoutchouc butyl, le stratifié multicouche de l'invention a l'avantage de présenter une hystérèse nettement plus faible, et donc d'offrir une résistance au roulement réduite aux bandages pneumatiques, par l'utilisation d'une couche étanche thermoplastique. De plus, cette couche étanche thermoplastique peut être posée sur la couche diénique du stratifié après cuisson du pneumatique.

Par ailleurs, comparativement aux couches d'étanchéité connues comprenant l'élastomère thermoplastique à blocs, comportant au moins un bloc central polyisobutylène et des blocs adjacents constitués d'au moins un monomère polymérisé, autre qu'un monomère styrénique, le stratifié de l'invention présente l'avantage majeur d'adhérer à une couche diénique conventionnelle, sans nécessiter une couche d'adhésion spécifique, puisque la deuxième couche du stratifié est cette couche conventionnelle, dans laquelle on remplace une fraction de l'élastomère diénique par un élastomère thermoplastique (TPE).

## Revendications

1. Stratifié élastomérique étanche pour pneumatique, ledit stratifié comportant au moins deux couches superposées d'élastomère :
∘ une première couche, constituée d'une composition à base d'au moins :
- un élastomère thermoplastique à blocs, comportant au moins un bloc central polyisobutylène et des blocs adjacents constitués d'au moins un monomère polymérisé, autre qu'un monomère styrénique, le taux dudit élastomère thermoplastique à blocs étant compris dans un domaine allant de plus de 50 à 100 pce (parties en poids pour 100 parties en poids d'élastomère), et étant entendu que la température de transition vitreuse dudit polymère non styrénique constituant le bloc thermoplastique de l'élastomère thermoplastique à blocs est supérieure ou égale à 60°C, et, dans le cas d'un bloc thermoplastique semi cristallin, une température de fusion supérieure à 60°C,
- et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique (TPE), le taux d'élastomère thermoplastique étant compris dans un domaine allant de 5 à moins de 50 pce,
étant entendu qu'au moins 5 pce des élastomères thermoplastiques présents dans la deuxième couche sont compatibles avec au moins 5 pce des élastomères thermoplastiques à blocs présents dans la première couche.

2. Stratifié selon la revendication 1, dans lequel la masse moléculaire moyenne en nombre de l'élastomère thermoplastique à blocs de la première couche est comprise entre 30 000 et 500 000 g/mol.

3. Stratifié selon l'une quelconque des revendications précédentes, dans lequel les blocs thermoplastiques de l'élastomère thermoplastique à blocs de la première couche sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques, et leurs mélanges.

4. Stratifié selon l'une quelconque des revendications précédentes, dans lequel le système plastifiant de la première couche comprend de 2 à 30 pce, et de préférence de 5 à 20 pce d'une huile plastifiante.

5. Stratifié selon l'une quelconque des revendications précédentes, dans lequel le système plastifiant de la première couche comprend de 2 à 30 pce, et de préférence de 5 à 20 pce de résine hydrocarbonée.

6. Stratifié selon l'une quelconque des revendications précédentes, dans lequel le taux total de plastifiant est compris dans un domaine allant de 5 à 45 pce.

7. Stratifié selon l'une quelconque des revendications précédentes, dans lequel la première couche comprend en outre une charge lamellaire.

8. Stratifié selon l'une quelconque des revendications précédentes, dans lequel la première couche ne contient pas de système de réticulation.

9. Stratifié selon l'une quelconque des revendications précédentes, dans lequel la masse moléculaire moyenne en nombre des élastomères thermoplastiques de la deuxième couche est comprise entre 30 000 et 500 000 g/mol.

10. Stratifié selon l'une quelconque des revendications précédentes, dans lequel les blocs élastomères des élastomères thermoplastiques (TPE) de la deuxième couche sont choisis parmi les élastomères ayant une température de transition vitreuse inférieure à 25°C.

11. Stratifié selon l'une quelconque des revendications précédentes, dans lequel les blocs élastomères des élastomères thermoplastiques (TPE) de la deuxième couche sont choisis dans le groupe constitué par les élastomères éthyléniques, les élastomères diéniques et leurs mélanges.

12. Stratifié selon l'une quelconque des revendications précédentes, dans lequel les blocs thermoplastiques des élastomères thermoplastiques de la deuxième couche sont choisis parmi les polymères ayant une température de transition vitreuse supérieure à 60°C et, dans le cas d'un bloc thermoplastique semi cristallin, une température de fusion supérieure à 60°C.

13. Stratifié selon l'une quelconque des revendications précédentes, dans lequel le taux d'élastomère thermoplastique (TPE) dans la composition de la deuxième couche est compris dans un domaine allant de 5 à 45 pce.

14. Pneumatique comportant un stratifié selon l'une quelconque des revendications précédentes.

15. Utilisation dans un objet pneumatique d'un stratifié selon l'une quelconque des revendications 1 à 13.

## Patentansprüche

1. Dichtes mehrschichtiges Laminat für einen Reifen, wobei das Laminat mindestens zwei übereinander liegende Schichten aus Elastomer umfasst:
∘ eine erste Schicht, die aus einer Zusammensetzung basierend auf mindestens den Folgenden besteht:
- einem thermoplastischen Block-Elastomer, umfassend mindestens einen mittigen Polyisobutylenblock und benachbarte Blöcke, die aus mindestens einem polymerisierten Monomer bestehen, bei dem es sich nicht um ein Styrolmonomer handelt, wobei der Gehalt des thermoplastischen Block-Elastomers in einem Bereich von mehr als 50 bis 100 phe (Gewichtsteile pro 100 Gewichtsteile Elastomer) liegt, wobei gilt, dass die Glasübergangstemperatur des Nichtstyrolpolymers, das den thermoplastischen Block des thermoplastischen Block-Elastomers bildet, über oder gleich 60°C ist und, wenn es sich um einen halbkristallinen thermoplastischen Block handelt, einen Schmelzpunkt von über 60°C aufweist,
- und einem Weichmachersystem, das 1 bis 40 phe eines Weichmacheröls und 1 bis 40 phe eines Kohlenwasserstoffharzes umfasst, wobei der Gesamtgehalt an Weichmacher in einem Bereich von 20 bis 70 phe liegt;
∘ eine zweite Schicht, die aus einer Zusammensetzung basierend auf mindestens einem Dien-Elastomer, wobei der Gehalt an Dien-Elastomer in einem Bereich von über 50 bis 95 phe liegt, und auf mindestens einem thermoplastischen Elastomer (TPE), wobei der Gehalt an thermoplastischem Elastomer in einem Bereich von 5 bis weniger als 50 phe liegt, besteht,
wobei gilt, dass mindestens 5 phe thermoplastische Elastomere, die in der zweiten Schicht vorliegen, mit mindestens 5 phe thermoplastischen Block-Elastomeren, die in der ersten Schicht vorliegen, kompatibel sind.

2. Laminat nach Anspruch 1, bei dem das zahlenmittlere Molekulargewicht des thermoplastischen Block-Elastomers der ersten Schicht zwischen 30 000 und 500 000 g/mol liegt.

3. Laminat nach einem der vorhergehenden Ansprüche, bei dem die thermoplastischen Blöcke des thermoplastischen Block-Elastomers der ersten Schicht aus der Gruppe bestehend aus Polyolefinen, Polyurethanen, Polyamiden, Polyestern, Polyacetalen, Polyethern, Phenylenpolysulfiden, Polyfluoriden, Polystyrolen, Polycarbonaten, Polysulfonen, Polymethylmethacrylat, Polyetherimid, thermoplastischen Copolymeren und ihren Mischungen ausgewählt sind.

4. Laminat nach einem der vorhergehenden Ansprüche, bei dem das Weichmachersystem der ersten Schicht 2 bis 30 phe, vorzugsweise 5 bis 20 phe, eines Weichmacheröls umfasst.

5. Laminat nach einem der vorhergehenden Ansprüche, bei dem das Weichemachersystem der ersten Schicht 2 bis 30 phe, vorzugsweise 5 bis 20 phe eines Kohlenwasserstoffharzes umfasst.

6. Laminat nach einem der vorhergehenden Ansprüche, bei dem der Weichmacher-Gesamtgehalt in einem Bereich von 5 bis 45 phe liegt.

7. Laminat nach einem der vorhergehenden Ansprüche, bei dem die erste Schicht weiterhin einen plättchenförmigen Füllstoff umfasst.

8. Laminat nach einem der vorhergehenden Ansprüche, bei dem die erste Schicht kein Vernetzungssystem enthält.

9. Laminat nach einem der vorhergehenden Ansprüche, bei dem das zahlenmittlere Molekulargewicht der thermoplastischen Elastomere der zweiten Schicht zwischen 30 000 und 500 000 g/mol beträgt.

10. Laminat nach einem der vorhergehenden Ansprüche, bei dem die Block-Elastomere der thermoplastischen Elastomere (TPE) der zweiten Schicht aus den Elastomeren mit einer Glasübergangstemperatur von unter 25°C ausgewählt sind.

11. Laminat nach einem der vorhergehenden Ansprüche, bei dem die Block-Elastomere der thermoplastischen Elastomere (TPE) der zweiten Schicht aus der Gruppe bestehend aus den Ethylen-Elastomeren, Dien-Elastomeren und Mischungen davon ausgewählt sind.

12. Laminat nach einem der vorhergehenden Ansprüche, bei dem die thermoplastischen Blöcke der thermoplastischen Elastomere der zweiten Schicht aus den Polymeren mit einer Glasübergangstemperatur von über 60°C und bei einem halbkristallinen thermoplastischen Block einem Schmelzpunkt von über 60°C ausgewählt sind.

13. Laminat nach einem der vorhergehenden Ansprüche, bei dem der Gehalt an thermoplastischem Elastomer (TPE) in der Zusammensetzung der zweiten Schicht in einem Bereich von 5 bis 45 phe liegt.

14. Reifen, umfassend ein Laminat nach einem der vorhergehenden Ansprüche.

15. Verwendung eines Laminats nach einem der Ansprüche 1 bis 13 in einem pneumatischen Objekt.

## Claims

1. Airtight elastomeric laminate for tyres, the said laminate comprising at least two superimposed layers of elastomer:
∘ a first layer, composed of a composition based on at least:
- a thermoplastic block elastomer comprising at least one central polyisobutylene block and adjacent blocks composed of at least one polymerized monomer, other than a styrene monomer, the content of the said thermoplastic block elastomer being within a range extending from more than 50 to 100 phr (parts by weight per 100 parts by weight of elastomer) and it being understood that the glass transition temperature of the said non-styrene polymer constituting the thermoplastic block of the thermoplastic block elastomer is greater than or equal to 60°C and, in the case of a semicrystalline thermoplastic block, a melting point greater than 60°C,
- and on a plasticizing system comprising from 1 to 40 phr of a plasticizing oil and from 1 to 40 phr of a hydrocarbon resin, the total content of plasticizer being within a range extending from 2 to 70 phr,
∘ a second layer, composed of a composition based on at least one diene elastomer, the content of diene elastomer being within a range extending from more than 50 to 95 phr, and on at least one thermoplastic elastomer (TPE), the content of thermoplastic elastomer being within a range extending from 5 to less than 50 phr,
it being understood that at least 5 phr of the thermoplastic elastomers present in the second layer are compatible with at least 5 phr of the thermoplastic block elastomers present in the first layer.

2. Laminate according to Claim 1, in which the number-average molecular weight of the thermoplastic block elastomer of the first layer is between 30 000 and 500 000 g/mol.

3. Laminate according to either one of the preceding claims, in which the thermoplastic blocks of the thermoplastic block elastomer of the first layer are selected from the group consisting of polyolefins, polyurethanes, polyamides, polyesters, polyacetals, polyethers, polyphenylene sulphides, polyfluorinated compounds, polystyrenes, polycarbonates, polysulphones, polymethyl methacrylate, polyetherimide, thermoplastic copolymers and their mixtures.

4. Laminate according to any one of the preceding claims, in which the plasticizing system of the first layer comprises from 2 to 30 phr and preferably from 5 to 20 phr of a plasticizing oil.

5. Laminate according to any one of the preceding claims, in which the plasticizing system of the first layer comprises from 2 to 30 phr and preferably from 5 to 20 phr of hydrocarbon resin.

6. Laminate according to any one of the preceding claims, in which the total content of plasticizer is within a range extending from 5 to 45 phr.

7. Laminate according to any one of the preceding claims, in which the first layer additionally comprises a platy filler.

8. Laminate according to any one of the preceding claims, in which the first layer does not comprise a crosslinking system.

9. Laminate according to any one of the preceding claims, in which the number-average molecular weight of the thermoplastic elastomers of the second layer is between 30 000 and 500 000 g/mol.

10. Laminate according to any one of the preceding claims, in which the elastomer blocks of the thermoplastic elastomers (TPEs) of the second layer are chosen from elastomers having a glass transition temperature of less than 25°C.

11. Laminate according to any one of the preceding claims, in which the elastomer blocks of the thermoplastic elastomers (TPEs) of the second layer are selected from the group consisting of ethylenic elastomers, diene elastomers and their mixtures.

12. Laminate according to any one of the preceding claims, in which the thermoplastic blocks of the thermoplastic elastomers of the second layer are chosen from polymers having a glass transition temperature of greater than 60°C and, in the case of a semicrystalline thermoplastic block, a melting point of greater than 60°C.

13. Laminate according to any one of the preceding claims, in which the content of thermoplastic elastomer (TPE) in the composition of the second layer is within a range extending from 5 to 45 phr.

14. Tyre comprising a laminate according to any one of the preceding claims.

15. Use, in a pneumatic object, of a laminate according to any one of Claims 1 to 13.
